# EUROPEAN PATENT APPLICATION

(11) **EP 1 339 188 A1**
(43) Date of publication of application: **27.08.2003**
(21) Application number: 02003874.1
(22) Date of filing: 20.02.2002
(51) Int. Cl.: H04L 1/00

(54) **Channel coding method**

(71) Applicant: SIEMENS AKTIENGESELLSCHAFT, 80333 München (DE)
(72) Inventor: Burkert, Frank, Dr., 80796 München (DE); Gerlach, Heino, 81675 München (DE)

(57) **Abstract**

Method for channel coding of data to be received with a in a communication device (UE)
- with a first subset of the data containing data symbols of a first quality class,
- with a second subset of the data containing data symbols of a second quality class,
- with a first set of correction data symbols to be used for a correction of data symbols in the first subset,
- with a second set of correction data symbols to be used for a correction of data symbols in the second subset,
characterised in that
the first set of correction bits is formed by an identification number (UE-ID) of the communication device.

## Description

### 1. Introduction

Wideband CDMA (WCDMA) as specified by the 3^{rd} generation Partnership Project (3GPP) is rapidly emerging as the leading global 3G (IMT-2000) standard.

The current WCDMA specification fully satisfies the IMT-2000 requirements, including support of data rates up to 2 Mbit/s in indoor/small-cell- outdoor environments and up 384 kbit/s with wide-area coverage, as well as support for both high-rate packet data and high-rate circuit-switched data.

However, to satisfy future increasing demands on packet-data services beyond the third-generation requirements, the WCDMA air interface will, as a first step, be evolved with High Speed Downlink Packet Access (HSDPA), scheduled for inclusion in release five of the 3GPP specifications.
HSDPA will improve WCDMA for best-effort packet data services in terms of lower delays and peak data rates up to 8-10 Mbit/s. HSDPA introduces a new transport channel, HS-DSCH (High Speed Downlink Shared Channel), primarily to be used for best-effort packet data. The HS-DSCH relies on channelisation codes at a fixed spreading factor, SF=16. A UE may be assigned multiple channelisation codes in the same TTI (Transmission Time Interval), depending on its UE capability. Furthermore, multiplexing of multiple UEs in the code domain within a HS-DSCH TTI is allowed.

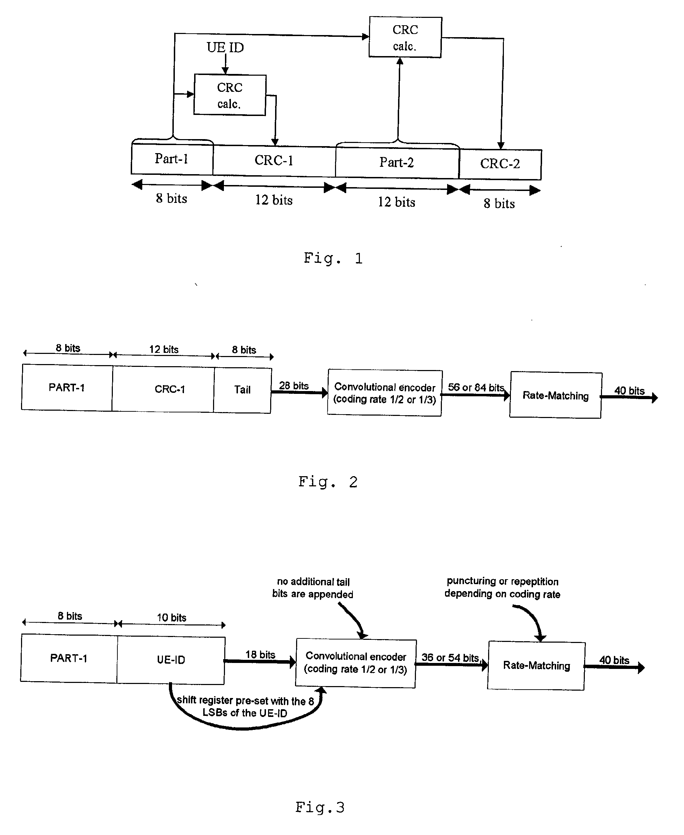

The associated downlink signalling information is mapped to the HS-SSCH (High Speed Shared Control Channel). The number of HS-SCCHs can range from a minimum of one HS-SCCH (M=1) to a maximum of four HS-SCCH's (M=4). Note that this is the number of HS-SCCH as seen from the UE point-of-view. More than four HS-SCCH can be configured per cell. According to the latest version of TR 25.858 [1] the coding scheme for the DL HS-SCCH is proposed as shown in Fig. 1:

The coding of the information bits is split into two parts since this allows for early extraction of the time-critical information of Part-1 of the SCCH-HS information, including CRC-1.
Part-1 of the signalling information, which comprises 8 bits information about the channelization code set and the modulation scheme, is encoded with an UE (User Equipment) specific 12 bit CRC (Cyclic Redundancy Check) for error detection purposes.
A second 8 bit CRC code is applied to Part 1 and Part 2 and is appended to Part 2 (CRC-2, see Fig. 1). The resulting 40 bits are then convolutionally encoded, where N_{T} intermediate tail bits are inserted after Part 1 and CRC-1.
The tail bits have to be introduced to flag the end of the convolutionally encoded bits.
Rate matching is performed separately for Part-1, CRC-1 and the N_{T} intermediate tail bits (in the following denoted by Part-1) on the one side and for Part-2, CRC-2 and the tail bits (Part-2) on the other side. After rate matching Part-1 and Part-2 shall comprise 40 bits and 80 bits, respectively, to fit into the data fields of the respective physical channel slots. The coding scheme for Part 1 of the HS-SCCH is depicted in Figure 2. The specification for the CRC as well as the convolutional encoder can be found in [3].
From Fig. 2 it can be seen, that after the convolutional encoder the bits have to be punctured regardless of the coding rate, as the number of bits after the encoder is always higher as the finally resulting 40 bits.

### 2.Description of the Invention

It is an object of the invention to provide a coding scheme that reduces a power imbalance between individual parts of the data.
A better coding scheme to meet this goal is characterised in that the CRC-1 regime is replaced by the UE-ID.

The different coding rates that result in 40 bits and 80 bits for Part-1 and Part-2 respectively enforce that different transmission powers have to be used for the individual parts, if a comparable target error rate has to be achieved.
Performance analyses have shown that this coding scheme suffers from a significant power imbalance between the two parts.

In other words, since the overall performance depends on the performance of the two parts, both parts need to achieve the same target error rate. Due to the much higher coding rate, Part-1 requires a significant higher Eₛ/N₀ (Signal to noise ratio; Eₛ denotes the symbol energy, N₀ the energy of the noise signal in the corresponding frequency regime) thanPart-2. At overall block error rates of 10⁻² and 10⁻³ the additional power required for Part-1 is larger than 3.5 dB.

The following alternative coding scheme for Part-1 greatly reduces the aforementioned power imbalance between the two parts of the HS-SCCH (see also [2]). The CRC-1 as well as the N_{T} intermediate tail bits are replaced by the 10 bit UE ID (UE specific bit pattern).

The UE-ID is known by the UE, thus directly after receiving the data corresponding to Part-1 and the former CRC-1, which is now replaced by the UE-ID, it can be decided, whether the received data are correct or not. There are different possibilities for the UE to gather knowledge about the UE-ID, e.g. that it is stored in a authentication module (e.g. SIM: Subscriber Identification Module) or that it is assigned, when a UE is being attached or logged on to a communication network.

The advantages of using the UE-ID will now be explained in more detail:

The 10 bit UE ID is appended to the 8 bit signalling information and is used as a UE specific tail for the convolutional encoder.
This means a reduction of the number of bits needed for the range denoted before as Part-1 and CRC-1, without a loss of information. It further implicates , that at later stages the bits do not need to be punctured as hard as before.

Besides, the encoding shift register is pre-set with the 8 MSBs (Most Significant Bits) of the UE ID.
This implicates that the encoding shift register needs not to be pre-set with zeros. This improves the error correction properties for the first two bits of the UE specific tail, thus the overall performance of detecting the UE ID correctly is improved.

The 36 (or 54) output bits of the convolutional encoder are rate matched to 40 bits.
In comparison to the state of the art encoding depicted in Fig. 2, now for a coding rate of 1/2 the bits can be repeated, which leads to a higher possibility of receiving the bits correctly. For a coding rate of 1/3 the puncturing is less severe than it was before (Reduction from 54 bits to 40 instead of 84 to 40 formerly).

At the decoding side the UE exploits the fact that the start as well as the final state of the encoding shift register depends on its UE ID. The explicitly transmitted UE ID can also be used for error detection purposes. A block (i.e. Part-1) is considered to be error free, if the UE ID could be decoded correctly. The coding for Part-2 remains as described in TR 25.858. Fig. 3 summarizes the new channel coding scheme.

Thus the proposed channel coding scheme can be summarised as follows:
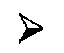 The 10 bit UE Id is appended to the 8 bit signalling information of Part-1
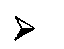 The resulting 18 bits are passed to the convolutional rate ½ (or rate 1/3) encoder; note that no additional tail bits are required/appended
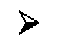 The encoding shift register is pre-set with the 8 MSBs of the UE Id
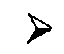 The 36 (or 54) output bits of the convolutional encoder are rate matched to 40 bits

Thus a solution to the problem of power imbalance between Part-1 and Part-2 of the current coding scheme for the HS-SCCH is given by employing the UE ID as a UE specific tail for the encoder. Moreover, the UE specific tail can be used for error detection purposes: every block, where the decoded UE Id does not match the UE ID of the decoding UE, is discarded.

The advantages of the invention are explained by further examples in conjunction with drawings set forth below. It is shown in
- Fig. 1: HS-SCCH Coding (from TR 25.858.1),
- Fig. 2: Old coding scheme for Part-1 of the HS-SCCH,
- Fig. 3: New coding scheme for Part-1 of the HS-SCCH,
- Fig. 4: Performance comparison for AWGN channel,
- Fig. 5: Reliability of the error detection based on the decoded UE ID,
- Fig. 6: Probability of 'false' detection alarm.

As said above, the replacement of the CRC-1 with UE-ID as UE specific tail and the pre-setting of the shift register of the convolutional encoder improve the error correction properties of the code. That is because for the new coding scheme (coding rate ½) the rate-matching algorithm repeats 4 bits while for the old scheme 16 bits must be punctured (coding rate 1/3: 14 bits puncturing compared to 44 bits puncturing).

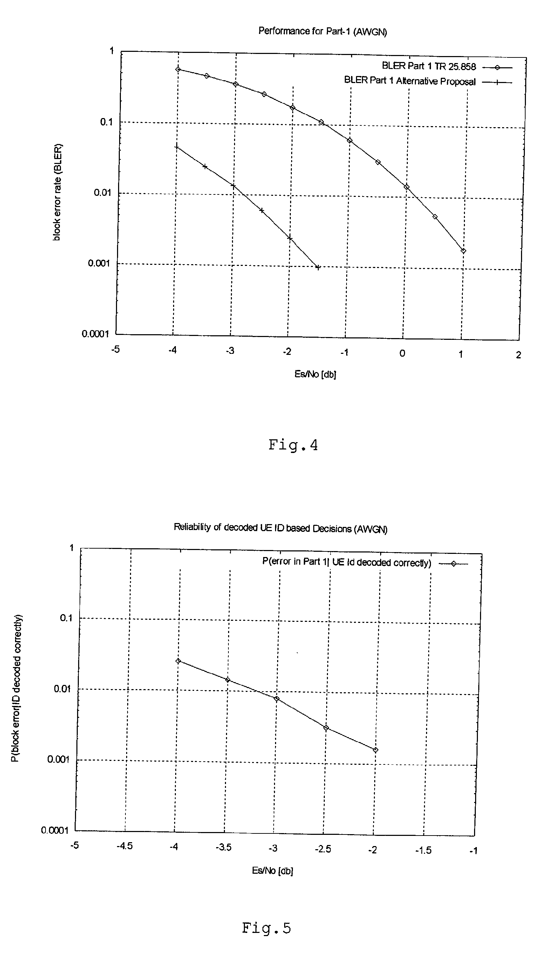

Fig. 4 gives a comparison of the BLERs (BLER: Block Error Rate) achieved with the TR 25.858 and the proposed coding schemes for an AWGN (Additive White Gaussian Noise) channel. For performance comparisons of codes the AWGN channel is usually employed since other methods (e.g. interleaving, diversity) are used to mitigate the effect of fading due to the multipath propagation over the air. At BLERs of 10⁻² and 10⁻³ a coding gain(given a BLER the coding gain is defined as the gain in the terms Eₛ/N₀ compared to the uncoded system definition of coding gain) of more than 2.5 dB is achieved over Eₛ/N₀. The power imbalance between the two parts can be reduced by this coding gain. The remaining power imbalance is then about 1 dB.

The explicitly transmitted UE Id can also be used for error detection purposes. A block (i.e. Part-1) is considered to be error free, if the UE Id could be decoded correctly.

Fig. 5 gives the probability of a block error occurring under the assumption that the UE ID was decoded correctly, which is equivalent to the probability of undetected errors in dependence on the Eₛ/N₀. The error detection capability for this kind of error is clearly below that of the CRC-1. Note that there is still CRC-2 that is calculated over Part-1 and Part-2, which can be used for error detection.

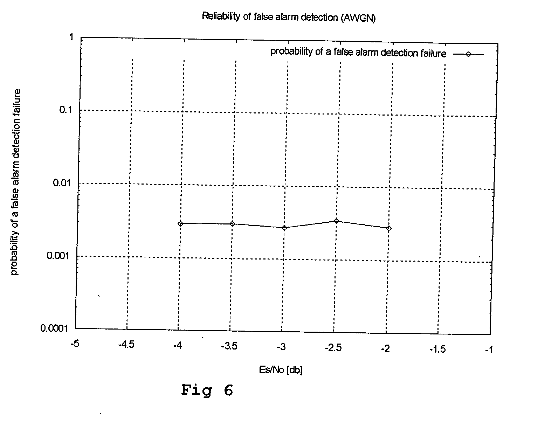

The UE specific CRC-1 of the coding scheme proposed in TR 25.858 is also used to detect false HI (HS-DSCH Indicator ) decisions. The HI consists of two information bits that indicate the HS-SCCH that carries the HS-DSCH-related signalling for the corresponding UE. It is also possible to deploy the decoded UE Id for this purpose. Every block, where the decoded UE Id does not match the UE Id of the decoding UE, is discarded. The event of a false HI detection will be denoted by 'false alarm' in the following. The probability of a 'false alarm detection failure', i.e. the probability that a 'false alarm' is not detected, is depicted in Fig. 6. Again, the reliability of the detection of 'false alarms' is less than that of CRC-1. This may be a problem, if there is only one HS-SCCH configured and no HI is present. However, a missed 'false alarm' could still be detected at a later stage, if CRC-2 is made UE specific.

### Conclusion

An alternative coding scheme for Part-1 of the HS-SCCH is proposed that significantly reduces the current power imbalance between Part-1 and Part-2. However, this coding scheme is less reliable with regard to undetected errors and missed 'false alarms'. But eventually undetected errors can be detected at a later stage by evaluation of CRC-2, if it is felt that the achieved reliability is not sufficiently high.

If the large power imbalance between Part-1 and Part-2 is considered to be an serious issue, it is recommended to adopt the proposed alternative coding scheme for the HS-SCCH.

### References

[1] 3GPP TR 25.858 V 1.0.4
[2] Siemens Contribution for RAN WG 1 #24
[3] 3GPP TS 25.212

## Claims

1. Method for channel coding of data to be received with a in a communication device (UE)
- with a first subset of the data containing data symbols of a first quality class,
- with a second subset of the data containing data symbols of a second quality class,
- with a first set of correction data symbols to be used for a correction of data symbols in the first subset,
- with a second set of correction data symbols to be used for a correction of data symbols in the second subset, **characterised in that**
the first set of correction bits is formed by an identification number (UE-ID) of the communication device.

2. Method according to claim 1, **characterised in that** if the identification number (UE-ID) of the communication device (UE) is detected, the first subset of data is assumed to be correct.

3. Method according to any of the previous claims, where the first and the second subset of data symbols and identification number (UE-ID) and the second subset of correction symbols are fed into a convolutional encoder with flexible rates.

4. Method according to any of the previous claims, where the output of the convolutional encoder is matched to a fixed final number of data symbols.

5. Method according to any of the previous claims, where the first subset of data symbols is sent with essentially the same transmission power as the second subset of data symbols.
